(19) Europäisches Patentamt
European Patent Office
Office européen des brevets

(11) **EP 4 074 765 A1**

(12) **EUROPEAN PATENT APPLICATION**
published in accordance with Art. 153(4) EPC

(43) Date of publication:
**19.10.2022 Bulletin 2022/42**

(21) Application number: **20899227.1**

(22) Date of filing: **20.11.2020**

(51) International Patent Classification (IPC):
***C08J 5/24*** (2006.01)     ***B32B 5/28*** (2006.01)

(52) Cooperative Patent Classification (CPC):
**B32B 5/28; C08J 5/24**

(86) International application number:
**PCT/JP2020/043325**

(87) International publication number:
**WO 2021/117461 (17.06.2021 Gazette 2021/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.12.2019  JP 2019223484**

(71) Applicant: **Toray Industries, Inc.**
**Tokyo, 103-8666 (JP)**

(72) Inventors:
• **SHINOHARA, Kyoko**
**Iyo-gun, Ehime 791-3193 (JP)**
• **HONMA, Masato**
**Iyo-gun, Ehime 791-3193 (JP)**
• **MISUMI, Jun**
**Iyo-gun, Ehime 791-3193 (JP)**

(74) Representative: **Mewburn Ellis LLP**
**Aurora Building**
**Counterslip**
**Bristol BS1 6BX (GB)**

(54) **PREPREG, LAMINATE, AND INTEGRATED MOLDED ARTICLE**

(57)    An object of the present invention is to provide a prepreg for producing a laminate suitable as a structural material; the prepreg having an excellent quality as a prepreg, and the resulting laminate having an excellent interlaminar fracture toughness value and being capable of firmly integrating with another structural member by welding; and a laminate. The present invention provides a prepreg including the following components [A], [B] and [C], in which [B] contains a thermoplastic resin having an aromatic ring with the amount of 10% or more by mass, a resin region containing [B] is present on one surface of the prepreg, a resin region containing [C] is present on another surface of the prepreg, and [A] that crosses over a boundary surface between the resin region containing [B] and the resin region containing [C] and that is in contact with both resin regions is present:
[A] a reinforcing fiber,
[B] a thermosetting resin, and
[C] a thermoplastic resin.

FIG.2

EP 4 074 765 A1

**Description**

Field

The present invention relates to a prepreg in which a thermosetting resin and a thermoplastic resin are impregnated into a reinforcing fiber, and to a laminate or an integrated product containing the thermosetting resin, the thermoplastic resin, and the reinforcing fiber.

Background

A fiber-reinforced composite material that combines a thermosetting resin or a thermoplastic resin as a matrix with a reinforcing fiber such as a carbon fiber and a glass fiber is a lightweight material yet having excellent mechanical properties such as strength and rigidity, as well as excellent heat resistance and corrosion resistance. Therefore, this has been used in numerous fields, including aerospace, automobiles, railway vehicles, marine vessels, civil engineering and construction, and sporting goods. However, these fiber-reinforced composite materials are not suitable for manufacturing of a part and a structural body having a complex shape in a single molding process. For the applications described above, it is necessary to prepare a member made of a fiber-reinforced composite material and then to integrate this with a similar or different type of a member. A mechanical bonding method using a bolt, a rivet, a screw, or the like, and a bonding method using an adhesive are used to integrate a fiber-reinforced composite material composed of a reinforcing fiber and a thermosetting resin with a similar or a different member. The mechanical bonding method requires a pre-processing process of a bonding portion, such as drilling of a hole, which leads to not only the increase in the time in the manufacturing process and in the manufacturing cost, but also the decrease in the material strength due to drilling of the hole. The bonding method using an adhesive requires bonding and curing processes, which include preparation and application of the adhesive; thus, this leads to the increase in the time in the manufacturing process and to the insufficient reliability in terms of the adhesion strength.

The fiber-reinforced composite material using a thermoplastic resin as the matrix bonds between members by welding in addition to the mechanical bonding method and the bonding method using an adhesive as described above; thus, it is possible to reduce the time necessary for bonding between members. On the other hand, when mechanical properties at a high temperature and an excellent resistance to chemicals are required as in the case of an aircraft structural member, there has been a problem in that the heat resistance and the chemical resistance thereof were not so good as those of the fiber-reinforced composite material composed of a thermosetting resin and a reinforcing fiber.

Here, Patent Literature 1 describes a method for bonding a fiber-reinforced composite material composed of a thermosetting resin and a reinforcing fiber via an adhesive.

Patent Literature 2 describes a method for integrating a member formed of a thermoplastic resin with a member formed of a fiber-reinforced composite material that is obtained from a thermosetting resin. Specifically, a thermoplastic resin film is laminated to the surface of a prepreg sheet composed of a reinforcing fiber and the thermosetting resin, and then, this is heated and pressurized to obtain a fiber-reinforced composite material. The resulting fiber-reinforced composite material is then placed in a mold, and then, the thermoplastic resin is injection molded to bond the thermoplastic resin member formed by injection molding with the fiber-reinforced composite material.

In addition, Patent Literature 3 describes a method for manufacturing a laminate in which a thermoplastic resin adhesive layer is formed on the surface of a composite material composed of a thermosetting resin and a reinforcing fiber. It is described that this shows the adhesive effect with other members via a thermoplastic resin.

Patent Literature 4 describes a prepreg and its fiber-reinforced composite material, in which a particle, or a fiber, or a film formed of a thermoplastic resin is placed on the surface layer of a prepreg composed of a reinforcing fiber and a thermosetting resin.

Citation List

Patent Literature

Patent Literature 1: Japanese Patent Application Laid-open No. 2018-161801
Patent Literature 2: Japanese Patent Application Laid-open No. H10-138354
Patent Literature 3: Japanese Patent No. 3906319
Patent Literature 4: Japanese Patent Application Laid-open No. H08-259713

Summary

Technical Problem

However, the method described in Patent Literature 1 is a method for bonding fiber-reinforced composite materials composed of a reinforcing fiber and a thermosetting resin to each other by using an adhesive; but, because the thermosetting resin is a matrix resin, welding cannot be used as the method for bonding the fiber-reinforced composite material as it is. Because it takes a time for the adhesive to be cured, there is a problem in that the bonding process is time-consuming. On top of this, the bonding strength thereof was not sufficient.

In the method described in Patent Literature 2, the bonding strength at the bonding portion between the thermosetting resin in the fiber-reinforced composite material and the thermoplastic resin film was not sufficient.

The fiber-reinforced composite material of Patent Literature 3 could be integrated by welding via the thermoplastic resin and exhibited an excellent bonding strength at room temperature, but the bonding strength at high temperature was not sufficient.

In the method described in Patent Literature 4, it is indicated that the particle, the fiber, or the film made of the thermoplastic resin improves an interlaminar fracture toughness value, but the bonding strength in the boundary portion between the thermosetting resin in the fiber-reinforced composite material and the thermoplastic resin was not sufficient.

Accordingly, an object of the present invention is to provide: a prepreg that has an excellent quality as a prepreg, that can weld with the same type or a different type of member, that expresses an excellent bonding strength, that has an excellent interlaminar fracture toughness value, and that gives a laminate suitable as a structural material; and a laminate and an integrated product thereof.

Solution to Problem

To solve the problem described above, a prepreg according to the present invention includes the following compositions. That is, a prepreg includes composition elements [A], [B], and [C] described below,

[A] a reinforcing fiber,
[B] a thermosetting resin, and
[C] a thermoplastic resin.

[B] contains a thermoplastic resin having an aromatic ring with an amount of 10% or more by mass, a resin region containing [B] is present on one surface of the prepreg, a resin region containing [C] is present on another surface of the prepreg, and [A] that crosses over a boundary surface between the resin region containing [B] and the resin region containing [C] and that is in contact with both resin regions is present.

Furthermore, the laminate, which is another aspect of the present invention, has any of the following compositions. That is, the laminate includes the composition in which the cured product of the above-described prepreg constitutes at least some of the layers, or includes the following composition. That is, A laminate comprising layers containing composition elements [A], [C], and [D] described below,

[A] a reinforcing fiber,
[C] a thermoplastic resin, and
[D] a thermosetting resin cured product.

[D] contains 10% or more by mass of a thermoplastic resin having an aromatic ring, and [A] that crosses over a boundary surface between a resin region containing [C] and a resin region containing [D] and that is in contact with both resin regions is present.

Here, whenever the term "laminate" is used in this specification, this shall refer to any of these laminates in accordance with the context unless otherwise specifically mentioned. Also, without any particular restriction, as it can be seen from this specification, the laminate according to the present invention is a fiber-reinforced resin that can be typically prepared by using a preform containing the prepreg of the present invention. Advantageous Effects of Invention

The prepreg and the laminate according to the present invention use a thermosetting resin and a thermoplastic resin, in which not only these two are firmly bonded, but also they can well weld with the same type or a different type of member. Accordingly, the time required in the bonding process can be shortened as compared with a conventional fiber-reinforced composite material using a thermosetting resin and a reinforcing fiber; thus, it is possible to speed up the molding process of a structural member. Furthermore, when the thermosetting resin is made to contain a specified amount of the thermoplastic resin having an aromatic ring, the resin properties suitable for the prepreg manufacturing process is obtained; thus, a high quality prepreg can be obtained. In addition, the laminate that exhibits an excellent bonding strength and is excellent as the structural material can be obtained. Accordingly, when this is applied to an aircraft structural member, a wind turbine blade, an automotive structural member, and computer applications such as an IC tray and a housing of a laptop computer, not only an excellent performance as the structural material is expressed, but also the molding time and cost of the products relating to the above-mentioned applications can be significantly reduced.

Brief Description of Drawings

FIG. 1 is a schematic diagram of the prepreg or the laminate according to the present invention, and illustrates a cross section that is perpendicular to the prepreg plane or the laminate plane relating to FIG. 2.
FIG. 2 is a schematic diagram of a cross section that is perpendicular to the prepreg plane or the laminate plane in the present invention, and is for the sake of explanation about the method to measure the roughness average length RSm and the roughness average height Rc. Description of Embodiments

<Composition Element [A]>

The reinforcing fiber of the composition element [A] used in the present invention includes a glass fiber, a carbon fiber, a metal fiber, an aromatic polyamide fiber, a polyaramide fiber, an alumina fiber, a silicon carbide fiber, a boron fiber, a basalt fiber, and the like. These may be used singly or in a combination of two or more of them as appropriate. These reinforcing fibers may be surface treated. The surface treatment includes a metal deposition treatment, a treatment with a coupling agent, a treatment with a sizing agent, and an adhesion treatment with an additive, and the like. In this specification, in the case that such a surface treatment is conducted to the reinforcing fiber, the reinforcing fiber shall include those in the state after having been subjected to the treatments as described above. These reinforcing fibers include the reinforcing fiber having an electric conductivity. The carbon fiber is preferably used as the reinforcing fiber because of its low specific gravity, high strength, and high elastic modulus.
Illustrative examples of the commercially available product of the carbon fiber include TORAYCA (registered trademark) T800G-24K, TORAYCA (registered trademark) T800S-24K, TORAYCA (registered trademark) T700G-24K, TORAYCA (registered trademark) T700S-24K, TORAYCA (registered trademark) T300-3K, and TORAYCA (registered trademark) T1100G-24K (all are manufactured by Toray Industries, Inc.).
The form and arrangement of the reinforcing fiber can be selected as appropriate from the reinforcing fibers arranged in one direction, a laminate of the reinforcing fibers arranged in one direction, a woven fabric, and the like. However, in order to obtain a lightweight laminate having a higher level of durability, it is preferable in each prepreg that the reinforcing fibers be long fibers arranged in one direction (fiber bundle) or in the form of continuous fibers such as a woven fabric.
The reinforcing fiber bundle may be composed of a plurality of fibers in the same form or a plurality of fibers in different forms. The number of the reinforcing fibers that constitute one reinforcing fiber bundle is usually in the range of 300 to 60,000; but considering the manufacturing of the base material, the number is preferably in the range of 300 to 48,000, while more preferably from 1,000 to 24,000. The range may be a combination of any of the upper limits and any of the lower limits described above.
The reinforcing fiber has a surface free energy of preferably in the range of 10 to 50 mJ/m$^2$ as measured by the Wilhelmy method. By controlling the surface free energy within this range, the reinforcing fiber expresses a high affinity with the thermosetting resin of [B] or with the thermosetting resin cured product of [D] and the thermoplastic resin of [C], and a high bonding strength at the boundary surface in which the reinforcing fiber crosses over between a resin region containing [B] or [D] and a resin region containing [C]. In addition, agglomeration of the reinforcing fibers among themselves is suppressed thereby resulting in good dispersion of the reinforcing fibers in the molded article and in less variation (coefficient of variation) in the bonding strength. The surface free energy of the reinforcing fiber is preferably in the range of 15 to 40 mJ/m$^2$, while more preferably in the range of 18 to 35 mJ/m$^2$.
The method to control the surface free energy of the reinforcing fiber includes the method in which an amount of an oxygen-containing functional group such as a carboxyl group and a hydroxyl group is controlled by oxidizing the surface thereof, or the method in which a single compound or a plurality of compounds is attached to the surface thereof. When a plurality of compounds is attached to the surface, a mixture of compounds having a high surface free energy and a low surface free energy may be attached. Hereinafter, the method to calculate the surface free energy of the reinforcing fiber will be explained. The surface free energy can be calculated by measuring the contact angle between the reinforcing fiber and each of three solvents (purified water, ethyleneglycol, and tricresyl phosphate) followed by the Owens' approximation method. The procedure is described below, but the measurement equipment and the detailed method thereof are not necessarily limited to the following.

By using DCAT11 manufactured by DataPhysics, firstly, after taking one monofilament out from the reinforcing fiber bundle, this is cut into eight fibers having the length of 12+2 mm, and then these are attached in parallel to a specialized holder FH12 (a flat plate whose surface is coated with an adhesive substance) with the distance of 2 to 3 mm between the monofilaments. The tips of the monofilaments are then trimmed and set in DCAT11 of the holder. For the measurement, a cell containing each solvent is brought close to the lower tips of the eight monofilaments at the speed of 0.2 mm/s and immersed to 5 mm from the tip of the monofilaments. Then, the monofilaments are pulled up at the speed of 0.2 mm/s. This operation is repeated four or more times. The force F received by the monofilament while being immersed in the liquid is measured using an electronic balance. This value is used to calculate the contact angle θ by the following equation.

$$COS\theta = (\text{force F (mN) received by 8 monofilaments})/(8$$
$$(\text{number of monofilaments}) \times \text{circumference of monofilament}$$
$$(m) \times \text{surface tension of solvent } (mJ/m^2))$$

The measurement was carried out with regard to the monofilaments extracted from three different locations of the reinforcing fiber bundle. That is, the average contact angle for a total of 24 monofilaments in one reinforcing fiber bundle was calculated.

The surface free energy of the reinforcing fiber $\gamma_f$ is calculated as the sum of the surface free energy of the polar component $\gamma^p_f$ and the surface free energy of the nonpolar component $\gamma^d_f$.

The surface free energy of the polar component $\gamma^p_f$ can be calculated as follows: by substituting the components of the surface tension and the contact angle of each liquid into the Owens' approximation formula (which is composed of the polar and the non-polar components of the surface tension specific to each solvent and the contact angle θ) and plotting them on X and Y, and then, by using the least square method to approximate a straight line, the value is obtained from the square of the slope a. The surface free energy of the nonpolar component $\gamma^d_f$ can be obtained by the square of the intercept b. The surface free energy of the reinforcing fiber $\gamma_f$ is the sum of the square of the slope a and the square of the intercept b.

$$Y = a \cdot X + b$$
$$X = \sqrt{(\text{polar component of solvent surface tension}}$$
$$(mJ/m^2))/\sqrt{(\text{non-polar component of solvent surface tension}}$$
$$(mJ/m^2))$$
$$Y = (1 + COS\theta)/(\text{polar component of solvent surface}}$$
$$\text{tension } (mJ/m^2))/2\sqrt{(\text{non-polar component of solvent surface}}$$
$$\text{tension } (mJ/m^2))$$

Polar component of the surface free energy of reinforcing fiber $\gamma^p_f = a^2$

Non-polar component of the surface free energy of reinforcing fiber $\gamma^d_f = b^2$

$$\text{Total surface free energy } \gamma_f = a^2 + b^2$$

The polar and the non-polar components of the surface tension of each solvent are as follows.

- Purified water

Surface tension 72.8 mJ/m²; polar component 51.0 mJ/m² and non-polar component 21.8 (mJ/m²)

- Ethyleneglycol

Surface tension 48.0 mJ/m$^2$; polar component 19.0 mJ/m$^2$ and non-polar component 29.0 (mJ/m$^2$)

- Tricresol phosphate

Surface tension 40.9 mJ/m$^2$, polar component 1.7 mJ/m$^2$ and non-polar component 39.2 (mJ/m$^2$)

<Composition Element [B]>

The thermosetting resin of the composition element [B] to be used in the present invention contains 10% or more by mass of a thermoplastic resin having an aromatic ring. ("Thermosetting resin" as the composition element [B] in this specification shall mean a resin composition that contains 50% or more by mass of a thermosetting resin and exhibits behaviors of the thermosetting resin as a whole.) When the content of the thermoplastic resin having an aromatic ring is less than 10% by mass, at the resin film producing process during prepreg manufacturing, or at the resin impregnating process to carbon fibers, the resin is taken off in a release paper or in a cover film, resulting in the increase in an unevenness of a basis weight of the thermosetting resin; thus, a high quality prepreg cannot be obtained. When the unevenness of the resin basis weight increases, the amount of the thermosetting resin in the laminate becomes uneven, resulting in an unevenness in the reinforcing fiber ratio and disorder in the arrangement of the fibers; these in turn result in the increase in the variation (coefficient of variation) of the bonding strength as an integrated product. The content of the thermoplastic resin having an aromatic ring is more preferably 13% or more by mass.

The thermoplastic resin component having an aromatic ring described above is a thermoplastic resin component other than the composition element [C], and is preferably soluble in the thermosetting resin of [B]. The term "soluble in the thermosetting resin" means that there is a temperature range in which the thermoplastic resin component being mixed with the thermosetting resin forms a homogeneous phase upon heating or heating with stirring. Here, the term "forming a homogeneous phase" means that there is no separation by a visual observation. The term "state of being dissolved" refers to the state in which the thermosetting resin including the thermoplastic resin component is in a homogeneous phase in a certain temperature range. Once a homogeneous phase is formed in a certain temperature range, it does not matter whether or not separation would occur outside this temperature range, for example, at room temperature. Inclusion of such a thermoplastic resin having an aromatic ring increases the affinity with the thermoplastic resin of [C] thereby leading to enhancement of the interface strength between the resin region containing [B] or [D] and the resin region containing [C]; as a result, an excellent bonding strength as the integrated product can be expressed.

In general, the thermoplastic resin having an aromatic ring is preferably the thermoplastic resin having in the main chain thereof a bond selected from the group consisting of a carbon-carbon bond, an amide bond, an imide bond, an ester bond, an ether bond, a carbonate bond, a urethane bond, a thioether bond, a sulfone bond, and a carbonyl bond. Also, the thermoplastic resin component may partially have a cross-linked structure; and also, this may be crystalline or amorphous. In particular, preferable is at least one resin selected from the group consisting of polycarbonate, polyphenylene oxide, polyphenylene sulfide, polyarylate, polyester, polyamide imide, polyimide, polyether imide polysulfone, polyether sulfone, polyether ketone, polyether ether ketone, phenoxy resin, and polybenzimidazole.

In particular, the thermoplastic resin having an aromatic ring is preferably a polyether sulfone or a polyether imide. The polyether imide and the polyether sulfone have a strong interaction with the composition element [C] due to the hydrogen bonding property thereof, thereby leading to enhancement of the interface strength between the resin region containing [B] or [D] and the resin region containing [C]; as a result, an excellent bonding strength as the integrated product can be expressed. In addition, the polyether imide and the polyether sulfone also have an excellent heat resistance thereby expressing an excellent bonding strength even in a high environmental temperature; thus, these are good examples for this.

The weight-average molecular weight of the thermoplastic resin having an aromatic ring is preferably in the range of 10,000 to 40,000 g/mol both inclusive. When the weight-average molecular weight is 10,000 g/mol or higher, the thermoplastic resin has excellent heat resistance and mechanical properties; thus, this expresses an excellent bonding strength under an environment of a room temperature as well as a high environmental temperature. When the weight-average molecular weight is 40,000 g/mol or less, the compatibility with the composition element [C] increases thereby increasing the interface strength between the resin region containing [B] or [D] and the resin region containing [C]; as a result, an excellent bonding strength is expressed.

In the composition element [B], the storage modulus at 90°C at the temperature raising process of 1.5°C/min using a rheometer is preferably in the range of 1.0 to 100 Pa. When the storage modulus at 90°C in [B] is 1.0 Pa or higher, at the thermosetting resin film producing process during prepreg manufacturing, or at the resin impregnating process to carbon fibers, the resin is less taken off in a release paper or in a cover film, thereby resulting in the decrease in an unevenness of a basis weight of the resin; thus, a high quality prepreg can be obtained. In the composition element [B], when the storage modulus at 90°C is 100 Pa or less, the resin is not scratched at the film producing process of the thermosetting resin during prepreg manufacturing. As a result, the resin film having a uniform thickness can be obtained, so that a high quality prepreg having less unevenness in the resin basis weight can be obtained. The smaller unevenness in the resin basis weight can lower the unevenness in the amount of the thermosetting resin in the laminate and can suppress formation of the defect such as a void. Accordingly, it becomes possible to lower the variation (coefficient of variation) in the bonding strength of the integrated product. The storage modulus at 90°C is more preferably in the range of 1.0 to 50 Pa, while still more preferably in the range of 1.0 to 30 Pa.

Furthermore, in the composition element [B], the temperature to reach a minimum viscosity thereof at the temperature raising process of 1.5°C/min is preferably in the range of 120°C or higher. This suppresses thickening of the resin in the prepreg manufacturing process so that the resin film having a uniform thickness can be obtained. As a result, a high quality prepreg having less unevenness in the resin basis weight can be obtained. The viscosity of the composition element [B] at the temperature raising process of 1.5°C/min using a rheometer gradually decreases; then, as the temperature is raised further, the fluidity thereof decreases due to progress of the curing reaction, and above a certain temperature, the viscosity starts to increase. This temperature was defined as the temperature to reach the minimum viscosity, and the viscosity immediately before the viscosity starts to increase was defined as the minimum viscosity. From the viewpoint of the production efficiency, the temperature to reach the minimum viscosity is preferably 180°C or lower. Furthermore, when the minimum viscosity is 0.5 Pa·s or higher, it is difficult to cause disorder in the arrangement of the carbon fibers during lamination molding, so that the integrated product expresses a high boding strength with lowering the variation in the bonding strength. The minimum viscosity when the temperature is raised at 1.5°C/min using a rheometer is more preferably 1.0 Pa·s or more, while still more preferably 2.0 Pa·s or more. From the viewpoint of the quality of the laminate obtained after molding, the minimum viscosity is 100 Pa·s or less, while more preferably 10 Pa·s or less.

Illustrative examples of the thermosetting resin to be used in the composition element [B] include an unsaturated polyester resin, a vinyl ester resin, an epoxy resin, a phenol resin, a urea resin, a melamine resin, a polyimide resin, a cyanate ester resin, a bismaleimide resin, a benzoxazine resin, a copolymer or a modified body of these resins, or a blend of at least two of these resins. In order to improve the impact resistance, an elastomer or a rubber component may be added to the thermosetting resin. Among these, an epoxy resin is preferable because of its excellent mechanical properties, heat resistance, and adhesion to the reinforcing fiber. Illustrative examples of the main component of the epoxy resin include bisphenol epoxy resins such as a bisphenol A epoxy resin, a bisphenol F epoxy resin, a bisphenol AD epoxy resin, a bisphenol S epoxy resin, and a brominated epoxy resin such as a tetrabromobisphenol A diglycidyl ether, an epoxy resin having a biphenyl skeleton, an epoxy resin having a naphthalene skeleton, an epoxy resin having a dicyclopentadiene skeleton, novolac epoxy resins such as a phenol novolac epoxy resin and a cresol novolac epoxy resin, N,N,O-triglycidyl-m-aminophenol, N,N,O-triglycidyl-p-aminophenol, N,N,O-triglycidyl-4-amino-3-methylphenol, N,N,N',N'-tetraglycidyl-4,4'-methylenedianiline, glycidylamine epoxy resins such as N,N,N',N'-tetraglycidyl-2,2'-diethyl-4,4'-methylenedianiline, N,N,N',N'-tetraglycidyl-m-xylylenediamine, N,N-diglycidylaniline, and N,N-diglycidyl-o-toluidine, resorcinol diglycidyl ether, and triglycidyl isocyanurate.

It is preferable that the thermosetting resin used in the composition element [B] of the present invention include an epoxy resin. By including 40 to 100 parts by mass of a glycidylamine epoxy resin having 3 or more glycidyl groups relative to 100 parts by mass of the total epoxy resins contained in the thermosetting resin, the cured product having a high heat resistance can be obtained; so, this embodiment is more preferable. Illustrative examples of the glycidylamine epoxy resin containing 3 or more glycidyl groups include N,N,O-triglycidyl-m-aminophenol, N,N,O-triglycidyl-p-aminophenol, N,N,O-triglycidyl-4-amino-3-methylphenol, N,N,N',N'-tetraglycidyl-4,4'-methylenedianiline, N,N,N',N'-tetraglycidyl-2,2'-diethyl-4,4'-methylenedianiline, and N,N,N' ,N'-tetraglycidyl-m-xylylenediamine.

Illustrative examples of the curing agent for the epoxy resin contained in the composition element [B] include a dicyandiamide, an aromatic amine compound, a phenolic novolac resin, a cresol novolac resin, a polyphenol compound, an imidazole derivative, tetramethylguanidine, thiourea-added amine, carboxylic acid hydrazide, carboxylic acid amide, and polymercaptan.

Among them, when the aromatic amine curing agent is used as the curing agent for the epoxy resin, the epoxy resin having an excellent heat resistance can be obtained. Illustrative examples of the aromatic amine compound include 3,3'-diisopropyl-4,4'-diaminodiphenylsulfone, 3,3'-di-t-butyl-4,4'-diaminodiphenylsulfone, 3,3'-diethyl-5,5'-dimethyl-4,4'-diaminodiphenylsulfone, 3,3'-diisopropyl-5,5'-dimethyl-4,4'-diaminodiphenylsulfone, 3,3'-di-t-butyl-5,5'-dimethyl-4,4'-diaminodiphenylsulfone, 3,3',5,5'-tetraethyl-4,4'-diaminodiphenylsulfone, 3,3'-diisopropyl-5,5'-diethyl-4,4'-diaminodiphenylsulfone, 3,3'-di-t-butyl-5,5'-diethyl-4,4'-diaminodiphenylsulfone, 3,3',5,5'-tetraisopropyl-4,4'-diaminodiphenylsulfone, 3,3'-di-t-butyl-5,5'-diisopropyl-4,4'-diaminodiphenylsulfone, 3,3',5,5'-tetra-t-butyl-4,4'-diaminodiphenylsulfone, 4,4'-diaminodiphenylsulfone, and 3,3'-diaminodiphenylsulfone.

The thermosetting resin cured product of the composition element [D] in the laminate according to the present invention is typically a thermally cured thermosetting resin of the composition element [B] in the prepreg according to the present invention. The temperature condition for the thermal curing may be set appropriately in accordance with the thermosetting resin, the curing agent, and the curing accelerator, including the kinds and amounts thereof. For example, when an epoxy resin is included as the thermosetting resin and diaminodiphenylsulfone as the amine compound, the heating condition of 180°C for 2 hours may be preferably used.

<Composition Element [C]>

There is no particular restriction on the thermoplastic resin that constitutes the composition element [C] ("thermoplastic resin" as the composition element [C] in this specification means a resin composition that contains more than 50% by mass of the thermoplastic resin and exhibits the behavior of the thermoplastic resin as a whole); then, illustrative examples thereof include: polyester resins such as polyethylene terephthalate, polybutylene terephthalate, polytrimethylene terephthalate, polyethylene naphthalate, and a liquid crystal polyester; polyolefins such as polyethylene, polypropylene, and polybutylene; a styrene resin, a urethane resin, and polyoxymethylene; polyamides such as polyamide 6 and polyamide 66; polycarbonate, polymethyl methacrylate, polyvinyl chloride, polyphenylene sulfide, polyphenylene ether, modified polyphenylene ether, polyimide, polyamide imide, polyether imide, polysulfone, modified polysulfone, and polyether sulfone; polyarylene ether ketones such as polyketone, polyether ketone, polyether ether ketone, and polyether ketone ketone; polyarylate, polyether nitrile, a phenolic resin, and a phenoxy resin. The thermoplastic resin may also be a copolymer or a modified version of the above-mentioned resins and/or a blend of two or more of them. Among these, when [C] is one or two or more selected from polyamide, polyarylene ether ketone, polyphenylene sulfide, polyether sulfone, or polyether imide, this has an excellent heat resistance and a high bonding strength as the integrated product even under a high environmental temperature; thus, they are preferable.

In the case that the thermoplastic resin that constitutes [C] is a crystalline thermoplastic resin, when the viscosity thereof at the temperature higher than its melting point by 40°C is, or in the case that the thermoplastic resin is an amorphous thermoplastic resin, when the viscosity thereof at the temperature higher than its glass transition temperature by 40°C is in the range of 1,000 to 100,000 Pa·s both inclusive, fluidity of the resin of [C] at the time of bonding by welding using the surface on which the composition element [C] exists can be suppressed, so that an excellent bonding strength is expressed; thus, this embodiment is preferable. This viscosity is more preferably in the range of 1,000 to 10,000 Pa·s.

An elastomer or a rubber component may be added to the composition element [C] in order to enhance the impact resistance. In addition, other fillers and additives may be included therein as appropriate in accordance with the use and the like so far as such addition does not impair the purpose of the present invention. Illustrative examples thereof include an inorganic filler, a flame retardant, a conductive agent, a crystal nucleating agent, a UV absorber, an antioxidant, a vibration-damping agent, an antibacterial agent, an insect repellent, an odor repellent, an anti-coloring agent, a heat stabilizer, a mold release agent, an antistatic agent, a plasticizer, a lubricant, a colorant, a pigment, a dye, a foaming agent, an antifoaming agent, and a coupling agent.

<Prepreg>

The prepreg according to the present invention has a resin region containing [B] on one surface thereof and a resin region containing [C] on the other surface thereof. In the prepreg according to the present invention, there is a reinforcing fiber of [A] that crosses over the boundary surface between the resin region containing [B] and the resin region containing [C] and is in contact with both the resin regions. When there is the reinforcing fiber of [A] that crosses over the boundary surface between the resin region containing the composition element [B] and the resin region containing the composition element [C] and is in contact with both the resin regions, [A] chemically and/or physically bonds with [B] and [C]; thus, this causes exfoliation of the resin region containing [B] from the resin region containing [C] to be difficult, leading to the increase in the bonding strength. The chemical and/or physical bonding of the composition element [A] with the composition element [B] and with the composition element [C] across the boundary surface enhances the adhesion between the resin region containing the composition element [B] and the resin region containing the composition element [C] .

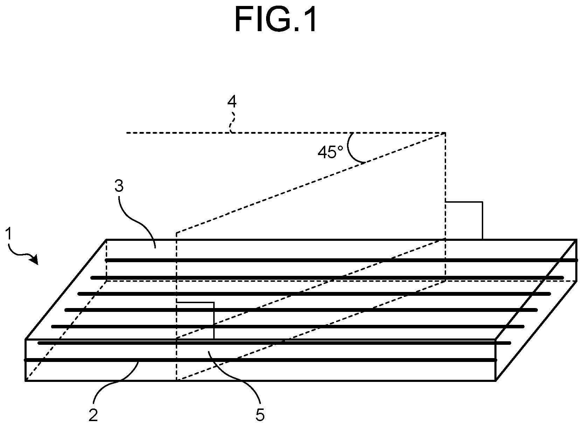

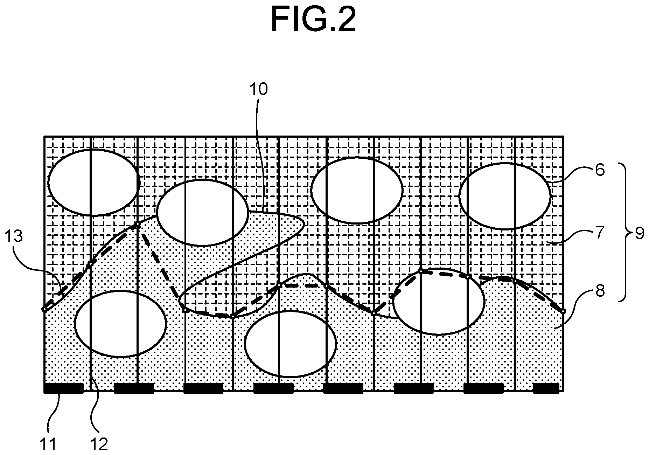

In the prepreg according to the present invention, it is preferable that the resin region containing [B] and the resin region containing [C] be layered adjacent to each other. FIG. 1 is a schematic diagram of the prepreg or the laminate according to the present invention, and FIG. 2 is a schematic diagram of a cross section that is perpendicular to the prepreg plane or the laminate plane, described in FIG. 1 as a cross section observation surface 5.

In the prepreg according to the present invention, layered and adjacent means the state in which, for example, as illustrated in FIG. 2, a resin region 7 containing [C] and a resin region 8 containing [B], which are continuous in the plane direction, exist in close contact with each other while forming a boundary surface 10 in the cross section obtained by cutting perpendicularly to the prepreg plane direction. When the resin region 7 containing [C] is not in a layered and continuous state, but exists in a particulate, a fibrous, an unwoven, or other form, the ratio of the area where the thermosetting resin of [B] is exposed on the surface increases and the covering rate of [C] on the outermost surface decreases, so that the welding property tends to be lowered.

Furthermore, when the prepreg is viewed in plane, from a direction that differs by an angle of 45 degrees, regardless of whether clockwise or counterclockwise, to the fiber direction of any fiber [A] in contact with both the resin regions, a cross section perpendicular to the prepreg plane containing the fiber [A] that crosses over both the resin regions is obtained. In this cross section, namely, the cross section obtained by cutting or the like perpendicularly to the plane direction of the prepreg, a roughness average length RSm of 100 $\mu$m or less and a roughness average height Rc of 3.5 $\mu$m or more are preferable in order to improve the bonding strength, where these length and height are of a cross section curve formed by the boundary of the two resins and are defined by JIS B0601 (2001).

When the roughness average length RSm is 100 $\mu$m or less, not only the chemical and/or physical bonding force but also the mechanical bonding force of interlocking makes it difficult for the resin region containing the composition element [B] and the resin region containing the composition element [C] to be exfoliated from each other. The lower limit thereof is not particularly restricted; but from the viewpoint of avoiding a decrease in the mechanical bonding strength due to stress concentration, this is preferably 15 $\mu$m or more. In addition, when the roughness average height Rc of the cross section curve is 3.5 $\mu$m or higher, not only the mechanical bonding force due to interlocking is expressed, but also the composition element [A] that crosses over the boundary surface and that is in contact with both the resin regions chemically and/or physically bonds with the composition element [B] and the composition element [C], so that the adhesion of the resin region containing the composition element [B] with the resin region containing the composition element [C] is improved. The preferable range of the roughness average height Rc of the cross sectional curve is 10 $\mu$m or more; with this, the composition element [A] is more easily contact with both the resin regions, thereby enhancing the adhesion furthermore. This is especially preferable when this is 20 $\mu$m or more. The upper limit thereof is not particularly restricted; but from the viewpoint of avoiding a decrease in the mechanical bonding strength due to stress concentration, this is preferably 100 $\mu$m or less.

For the measurement of the roughness average height Rc and the roughness average length RSm of the cross section curve, known methods may be used. For example, after the composition element [B] is cured, the measurement may be made from the cross section image obtained by using an X-ray CT, from the elemental analysis mapping image obtained by using an energy dispersive X-ray spectrometer (EDS), or from the cross section observation image obtained by using an optical microscope, a scanning electron microscope (SEM), or a transmission electron microscope (TEM). In these observations, the composition element [B] and/or the composition element [C] may be stained to adjust the contrast. In the image obtained by any of the above methods, the roughness average height Rc and the roughness average length RSm of the cross section curve are measured in the area of a 500 $\mu$m square.

An example of the method for measuring the roughness average height Rc and the roughness average length RSm of the cross section curve is illustrated in FIG. 2. In an observed image 9 illustrated in FIG. 2, the resin region 7 containing the composition element [C] is in close contact with the resin region 8 containing the composition element [B]; and this is illustrated as the boundary surface 10 in the observed image 9. A plurality of the composition elements [A] 6 is present on the boundary surface 10.

An example of the method for measuring the roughness average height Rc and the roughness average length RSm of a cross section curve 13 (measurement method 1 of the cross section curve element) is described below. The edge on the side of the resin region containing the composition element [B] in a rectangular observed image 9 is used as a baseline 11; then, perpendicular baselines 12 are drawn with the interval of 5 $\mu$m from the resin region 8 containing the composition element [B] to the resin region 7 containing the composition element [C]. The point where the perpendicular baseline 12 drawn from the baseline 11 intersects the composition element [C] for the first time is plotted, and the line connecting these plotted points is used as the cross section curve 13. The obtained cross section curve 13 is subjected to the filtering process based on JIS B0601 (2001) to calculate the roughness average height Rc and the roughness average length RSm of the cross section curve 13.

In the prepreg according to the present invention, it is preferable that the basis weight of the thermoplastic resin of the composition element [C] be 10 g/m$^2$ or more. The basis weight of 10 g/m$^2$ or more is preferable, because this provides a sufficient thickness to express an excellent bonding strength. The basis weight of 20 g/m$^2$ is more preferable. Although the upper limit thereof is not particularly restricted, this is preferably 500 g/m$^2$ or less, because this amount of the thermoplastic resin is not too much relative to the reinforcing fiber, so that the laminate having excellent specific strength and specific modulus can be obtained. Here, the basis weight refers to the mass (g) of the composition element [C] included in 1 m$^2$ of the prepreg.

In the prepreg according to the present invention, the amount of the reinforcing fiber per unit area is preferably in the range of 30 to 2,000 g/m$^2$. When the amount of the reinforcing fiber is 30 g/m$^2$ or more, the number of the laminate films to obtain a predetermined thickness can be reduced in the laminate molding, so that the workability is likely to be improved. On the other hand, when the amount of the reinforcing fiber is 2,000 g/m$^2$ or less, the draping property of the prepreg is likely to be improved.

The content of the reinforcing fiber in the prepreg according to the present invention is preferably in the range of 30 to 90% by mass, more preferably in the range of 35 to 85% by mass, while still more preferably in the range of 40 to 80% by mass. The range may be a combination of any of the upper limits and any of the lower limits described above.

When the content of the reinforcing fiber is 30% or more by mass, the amount of resin is not too much relative to the fiber; thus, the laminate's advantages of the excellent specific strength and of the specific modulus is likely to be obtained, and upon molding of the laminate, the amount of heat generated at the time of curing is unlikely to become excessively high. When the content of the reinforcing fiber is 90% or less by mass, the chance of poor impregnation of the resin is likely to be reduced thereby leading to the decrease in formation of the void in the resulting laminate.

<Laminate>

Another aspect of the present invention is the laminate that is produced by the method in which the preform having at least some of the layers thereof composed of the prepreg according to the present invention is cured by pressurizing and heating, namely, the laminate having at least some of the layers thereof composed of the cured product of the prepreg according to the present invention; the preform being produced by laminating a plurality of the prepregs according to the present invention, or by laminating the prepreg according to the present invention with a prepreg other than the prepreg according to the present invention. Here, illustrative examples of the method for heating and pressurizing include a press molding method, an autoclave molding method, a bag molding method, a wrapping tape method, and an internal pressure molding method.

Alternatively, still another aspect of the present invention is the laminate including layers containing composition elements [A], [C], and [D], in which [D] contains the thermoplastic resin having an aromatic ring with the amount of 10% or more by mass, and a reinforcing fiber of [A] that crosses over a boundary surface between a resin region containing [C] and a resin region containing [D] and is in contact with both the resin regions is present.

When the laminate is viewed in a plane, from a direction that differs by an angle of 45 degrees, regardless of whether clockwise or counterclockwise, to a fiber direction of any [A] in contact with both the resin regions, a cross section perpendicular to the plane of the laminate containing [A] that crosses over both the resin regions is obtained; in this cross section, namely, in the cross section that is obtained by cutting or the like perpendicularly to the plane direction of the laminate, the roughness average length RSm of 100 $\mu$m or less and the roughness average height Rc of 3.5 $\mu$m or more are preferable. Here, the length and height are of a cross section curve formed by a boundary surface of the two adhered resin regions and defined by JIS B0601 (2001). The roughness average height Rc is more preferably 10 $\mu$m or more. The lower limit of RSm and the upper limit of Rc are not particularly restricted; but from the concern of a decrease in the mechanical bonding strength due to stress concentration, it is preferable that RSm be 15 $\mu$m or more and Rc be 100 $\mu$m or less.

The roughness average height Rc and roughness average length RSm of the cross section curve may be obtained by the method similar to the measurement method used in the prepreg according to the present invention as described before.

Illustrative examples of the molding method of the laminate according to the present invention include a press molding method, an autoclave molding method, a bag molding method, a wrapping tape method, an internal pressure molding method, a hand layup method, a filament winding method, a pultrusion method, a resin injection molding method, and a resin transfer molding method.

In the laminate according to the present invention, it is preferable that the thermoplastic resin of the composition element [C] be present on the surface thereof. In other words, it is preferable that the layer containing [A], [C] and [D] be present as the outermost layer, and that [C] be exposed to the surface thereof. In addition, in the laminate according to the present invention, it is preferable that the composition element [C] be present both on the surface of and inside the laminate; namely, it is preferable to have the layer containing [A], [C], and [D] also as an inner layer. When the thermoplastic resin of the composition element [C] is present on the surface of the laminate, the laminate according to the present invention can weld the same or different members via the composition element [C]; on the other hand, when the thermoplastic resin of the composition element [C] is present also inside the laminate, an excellent interlaminar fracture toughness value ($G_{IIC}$) is obtained.

<Integrated product>

When the laminate according to the present invention is bonded by a certain heater to another member, namely, to a member of the same type as the member composing the laminate and/or a member of a different type (material to be welded) on the surface where [C] is present, especially the composition element [C] on the surface of the laminate, the integrated product having integrated (welded) with the laminate via the composition element [C] can be obtained. Illustrative examples of the different type of member (material to be welded) include a member made of a thermoplastic resin and a member made of a metallic material. The member made of the thermoplastic resin may contain a reinforcing fiber, a filler, and the like. There is no particular restriction on the integration method; here, illustrative examples thereof include a thermal welding, a vibration welding, an ultrasonic welding, a laser welding, a resistance welding, an induction welding, an insert injection molding, and an outsert injection molding.

The strength of the bonding portion of the integrated product can be evaluated in accordance with ISO 4587:1995 (JIS K6850 (1994)). The tensile shear adhesion strength measured in accordance with ISO 4587:1995 under the testing environmental temperature of 23°C is preferably 25 MPa or more, while more preferably 28 MPa or more. In general, the laminate having 20 MPa or more can be used for bonding of a structural material; so, this is higher than the tensile shear adhesion strength of a common adhesive measured under the testing environmental temperature of 23°C (about 10 MPa). For the application requiring mechanical properties under a high environmental temperature, it is preferable to exhibit the bonding strength of 13 MPa or more, while more preferably 16 MPa or more, based on the evaluation in accordance with ISO 4587:1995 under the testing environmental temperature of 80°C. The higher the tensile shear adhesion strength, the better; so, there is no particular restriction on this, although the upper limit of the tensile shear adhesion strength of the integrated product of a normal laminate under the testing environmental temperature of 23°C or 80°C is 200 MPa.

The laminate according to the present invention is preferably used for an aircraft structural member, a wind turbine blade, an automotive exterior plate, computer applications such as an IC tray and a housing of a laptop computer, sporting goods such as a golf club shaft and a tennis racket, etc.

[Examples]

Hereinafter, the present invention will be described in detail by means of Examples. However, the scope of the present invention is not limited to these Examples. The unit "part" in the composition ratio means part by mass unless otherwise specifically noted. The measurement of various characteristics was performed under an ambient temperature of 23°C and the relative humidity of 50% unless otherwise specifically noted.

<Materials Used as Reinforcing Fiber of Composition Element [A]>

After a common carbon fiber bundle as the raw material was obtained by the method described below, various compounds as the sizing agent were applied to the bundle to obtain the reinforcing fiber. First, acrylonitrile copolymer copolymerized with itaconic acid was spun and calcined to obtain the carbon fiber bundle having the total filament number of 24,000, the specific gravity of 1.8 g/cm$^3$, the strand tensile strength of 4.9 GPa, and the strand tensile modulus of 230 GPa. The various compounds as the sizing agent each were mixed with acetone to obtain a solution of about 1% by mass of the compound uniformly dissolved therein. After applying the compound to the carbon fiber bundle by the immersion method, this was heat-treated at 210°C for 90 seconds in such a way as to control the amount of the compound adhered to the carbon fiber to 0.5 parts by mass relative to 100 parts by mass of the carbon fiber. The compounds used as the sizing agent for the carbon fiber as well as the surface free energies after application of the sizing agent are as follows.

- CF1: Polyethylene glycol diglycidyl ether ("Denacol" (registered trademark) EX-841, manufactured by Nagase ChemteX Corp.) with the surface free energy of 20 mJ/m$^2$
- CF2: Bisphenol A diglycidyl ether ("jER" (registered trademark) 828, manufactured by Mitsubishi Chemical Corp.) with the surface free energy of 9 mJ/m$^2$
- CF3: Sorbitol polyglycidyl ether ("Denacol" (registered trademark) EX-614B, manufactured by Nagase ChemteX Corp.) with the surface free energy of 32 mJ/m$^2$

<Preparation Method and Evaluation Method of Thermosetting Resin of Composition Element [B]>

Thermosetting resins for each of the specific examples listed in Table 1 were prepared using the following (1) to (4) compounds with the method described in (5); then, they were evaluated with the method described in (6).

(1) Epoxy Resin

- Tetraglycidyl diaminodiphenylmethane ("Araldite" (registered trademark) MY721, manufactured by Huntsman Advanced Materials, Inc.), epoxy equivalent of 113 (g/eq.), tetrafunctional glycidylamine epoxy resin)
- Bisphenol F epoxy resin ("Epc" (registered trademark) 830, manufactured by DIC Corp.), epoxy equivalent of 170 (g/eq.))

(2) Amine Compound

- 4,4'-Diamino diphenylsulfone (Seika Cure S, manufactured by Wakayama Seika Kougyou Co., Ltd.)
- Dicyandiamide (DICY7, manufactured by Mitsubishi Chemical Corp.)

(3) Curing Catalyst

3-(3,4-dichlorophenyl)1,1-dimethylurea (DCMU99, manufactured by Hodogaya Chemical Co., Ltd.)

(4) Thermoplastic Resin Having Aromatic Ring

- Polyether sulfone (SUMIKAEXCEL (registered trademark) PES5003P, manufactured by Sumitomo Chemical Co., Ltd.; weight-average molecular weight of 47,300 g/mol)
- Polyether sulfone (Virantage 10700RFP, manufactured by Solvay S.A.; weight-average molecular weight of 21,000 g/mol)

(5) Preparation Method of Thermosetting Resin

An epoxy resin and a viscosity controller described in Table 1 were charged into a kneading machine; then, they were heated and kneaded to dissolve the viscosity controller (note that there may be the case that the viscosity controller is not added). Then, the temperature was lowered to 100°C or less with continuing the kneading. An amine compound and a curing catalyst selected as appropriate from those listed in Table 1 were added (note that there may be the case that the curing catalyst is not added), and the resulting mixture was stirred to obtain the thermosetting resins B-1 to B-7.

(6) Measurement Method of Viscoelasticity of Thermosetting Resin

The viscoelasticity of the thermosetting resin was measured using a dynamic viscoelasticity apparatus ARES-G2 (manufactured by T.A. Instruments Inc.). A flat parallel plate with a diameter of 40 mm was used as the upper and the lower measuring jigs, and the resin was set such that the distance between the upper and lower jigs became 1 mm, then the measurement was conducted at a strain rate of 3.14 rad/s. The temperature was raised from 20°C to 170°C with the temperature raising rate of 1.5°C/min; then, the storage modulus at 90°C, the minimum viscosity, and the temperature at this time were read. In addition, after the jigs and the resin were set in the same way as above, the measurement was conducted at 90°C with the strain rate of 3.14 rad/s; then, the thickening factor at 90°C was calculated using the following calculation formula.

```
Thickening factor at 90°C (times) = (viscosity after 3
hours)/(viscosity at the start of measurement)
```

<Material Used as Thermoplastic Resin of Composition Element [C] and Evaluation Method>

The thermoplastic resins listed in Tables 2 and 3 as follows were used.

- PA6: A film formed of polyamide 6 ("Amilan" (registered trademark) CM1007 (manufactured by Toray Industries, Inc.; melting point of 225°C)) with the basis weight of 120 g/m$^2$
- PPS-1: A film formed of polyphenylene sulfide ("Torelina" (registered trademark) A900 (manufactured by Toray Industries, Inc.; melting point of 278°C)) with the basis weight of 120 g/m$^2$
- PPS-2: A film formed of polyphenylene sulfide ("Torelina" (registered trademark) A670T05 (manufactured by Toray Industries, Inc.; melting point of 278°C)) with the basis weight of 120 g/m$^2$
- PEKK1: A film formed of polyether ketone ketone ("KEPSTAN" (registered trademark) 6002 (manufactured by Arkema Inc.; melting point of 300°C)) with the basis weight of 120 g/m$^2$
- PEKK2: A film formed of polyether ketone ketone ("KEPSTAN" (registered trademark) 7002 (manufactured by Arkema Inc.; melting point of 331°C)) with the basis weight of 120 g/m$^2$

- PEEK: A film formed of polyether ether ketone (PEEK 450G (manufactured by Victrex plc.; melting point of 343°C)) with the basis weight of 120 g/m$^2$
- Semi-aromatic PA: A film formed of polyamide 6T (glass transition temperature of 125°C) with the basis weight of 120 g/m$^2$
- PEI: A film formed of polyether imide ("ULTEM" (registered trademark) 1010 (manufactured by SABIC; glass transition temperature of 217°C)) with the basis weight of 120 g/m$^2$

(1) Measurement Method of Melting Point and Glass Transition Temperature of Thermoplastic Resin

The melting point of the thermoplastic resin was measured using a differential scanning calorimeter (DSC) in accordance with JIS K7121 (2012). In the case when a plurality of melting points or of glass transition temperatures were observed, such as in the case of a mixture, the highest melting point or glass transition temperature was used as the melting point or the glass transition temperature of the thermoplastic resin.

(2) Measurement Method of Viscoelasticity of Thermoplastic Resin

The viscoelasticity of the thermosetting resin was measured using a dynamic viscoelasticity apparatus ARES-G2 (manufactured by T.A. Instruments Inc.). A flat parallel plate with a diameter of 40 mm was used as the upper and the lower measuring jigs, and the resin was set such that the distance between the upper and lower jigs became 1 mm, then the measurement was conducted at a strain rate of 3.14 rad/s. In the case of a crystalline thermoplastic resin, the temperature was raised till 60°C above the melting point thereof with the temperature raising rate of 1.5°C/min; then, the viscosity at the temperature 40°C above the melting point was read. In the case of an amorphous thermoplastic resin, the temperature was raised till 60°C above the glass transition temperature thereof with the temperature raising rate of 1.5°C/min; then, the viscosity at the temperature 40°C above the glass transition temperature was read.

<Preparation Method and Evaluation Method of Prepreg>

The prepreg was prepared by the following two methods. The composition elements used in each Example are listed in Tables 2 and 3.

[I] The reinforcing fibers of the composition element [A] (basis weight of 193 g/m$^2$) was drawn to the reinforcing fiber sheet aligned in one direction with a continuous state, and while running in one direction, a resin sheet formed of the composition element [C] having the basis weight of 120 g/m$^2$ was placed on the continuous reinforcing fiber sheet and heated with an IR heater to melt the composition element [C] so as to adhere to the entire one surface of the continuous reinforcing fiber sheet. Then, this was pressurized with a nip roll whose surface temperature was kept at the melting point of the composition element [C] or lower to cool the impregnated fiber-reinforced sheet to obtain an intermediate. The thermosetting resin relating to the composition element [B] selected as listed in Tables 2 and 3 was coated onto a release paper using a knife coater with the basis weight of 100 g/m$^2$ to prepare a thermosetting resin film. When the thermosetting resin film was coated on the release paper without any scratch with a visual observation, this is described as "no scratch in resin film" in Tables 2 and 3. Upon rolling up the release paper that covered the surface on the side opposite to the release paper to which the thermosetting resin was coated, when there was the thermoplastic resin remaining on the release paper, this is described as "resin taken off" in Tables 2 and 3. The resin basis weight of the produced thermosetting resin film was measured at five points in every 1 m, and the standard deviation thereof is listed in Tables 2 and 3 as "Unevenness in film basis weight". The thermosetting resin film was overlaid on the surface opposite to the side of the intermediate impregnated with the composition element [C]; then, the intermediate was impregnated with the thermosetting resin with heating and pressurizing by means of a heat roll to obtain the prepreg [I].
[II] The thermosetting resin relating to the composition element [B] selected as listed in Table 2 was coated onto a release paper using a knife coater with the basis weight of 50 g/m$^2$ to prepare a resin film. This resin film was overlaid on both sides of the reinforcing fibers (basis weight: 193 g/m$^2$) of the composition element [A] aligned in one direction; then, the prepreg [II] was obtained by impregnating the carbon fibers with the thermosetting resin with heating and pressurizing by means of a heat roll.

<Preparation Method of Laminate and Evaluation of Mechanical Properties>

(1) Measurement Method of Tensile Shear Adhesion Strength

Prepregs [I] and [II] prepared as described above were cut into predetermined size to obtain two sheets of prepreg [I] and six sheets of prepreg [II]. The preforms were prepared by stacking them to [0°/90°]$_{2s}$ (the symbol s indicates a mirror symmetry), in which the axial direction of the reinforcing fiber was defined as 0°, and the orthogonal direction to the axis was defined as 90°. At this time, the two outermost layers of both sides were laminated with prepreg [I], and both surface layers of the preform were formed so as to be the thermoplastic resin layers containing the composition element [C]. The preform was set in the press mold, and then pressurized and heated by using a press machine with the pressure of 0.6 MPa at 180°C for 120 minutes with keeping the shape of the preform by using a jig or a spacer, if necessary, to obtain the laminate.

The resulting laminate was cut into two pieces having the width of 250 mm and the length of 92.5 mm with the 0° direction as the longitudinal direction of the specimen; then, they were dried in a vacuum oven for 24 hours. Next, two panels were overlapped as the width of 25 mm × the length of 12.5 mm with the 0° direction as the longitudinal direction; then, this was kept under the pressure of 3 MPa at the temperature above the melting point of the used thermoplastic resin of the composition element [C] by 20°C for 1 minute, so that the overlapped surfaces were welded to obtain the integrated product. The resulting integrated product was adhered with a tab in accordance with ISO 4587:1995 (JIS K6850 (1994)); then, this was cut at the width of 25 mm to obtain the desired specimen.

The specimen thereby obtained was dried in a vacuum oven for 24 hours, and then the tensile shear adhesion strength thereof was measured at each of the environmental temperature of 23°C and of 80°C in accordance with ISO 4587:1995 (JIS K6850 (1994)). The evaluation was made as follows on the basis of the measurement results. The coefficient of variation was calculated by obtaining the standard deviation and the average value from the five measurement results of the tensile shear adhesion strength, which was followed by dividing the standard deviation by the average value. The results are listed in Tables 2 and 3.

(a) Tensile Shear Adhesion Strength at 23°C

The strength is 28 MPa or greater: A
The strength is 25 MPa or greater and less than 28 MPa: B
The strength is 20 MPa or greater and less than 25 MPa: C
The strength is less than 20 MPa: D (Failure)

(b) Tensile Shear Adhesion Strength at 80°C

The strength is 16 MPa or greater: A
The strength is 13 MPa or greater and less than 16 MPa: B
The strength is 10 MPa or greater and less than 13 MPa: C
The strength is less than 10 MPa: D (Failure)

(2) Measurement Method of Interlaminar Fracture Toughness Value (G$_{IIC}$)

The prepreg [I] prepared above was cut to a predetermined size, and a total of 20 sheets thereof were stacked in such a way as to be in the same direction as the reinforcing fiber direction. Then, the preform was prepared by inserting a release film for pre-crack introduction at the position between the 10th and 11th sheets in the middle. The preform was set in the press mold, and then pressurized and heated by using a press machine with the pressure of 0.6 MPa at 180°C for 120 minutes with keeping the shape of the preform by using a jig or a spacer, if necessary, to obtain the laminate.

From the resulting laminate, a rectangular specimen having the length of 150 mm and the width of 20 mm was cut out with the reinforcing fiber axis as the longitudinal direction of the specimen. Then, this was dried in a vacuum oven at 60°C for 24 hours. The obtained test specimen was subjected to evaluation of the interlaminar fracture toughness value (G$_{IIC}$) in a 23°C environment in accordance with JIS K7086 (1993).

<Measurement of Roughness Average Length RSm and Roughness Average Height Rc in Prepreg and Laminate>

Using the prepreg [I] prepared above, an image was taken using an optical microscope with the magnification of 1000 times in the cross section obtained by cutting perpendicularly to the prepreg plane direction at the angle of 45 degrees in the prepreg plane view to any fiber direction in [A] that is in contact with both the resin regions described above. In an arbitrary 500 μm square observation area in the obtained image, the roughness average length RSm and the roughness average height Rc were measured; these length and height being defined in JIS B0601 (2001) for the cross section curve element obtained by the measurement method 1 of the cross section curve element. In the obtained image, when the reinforcing fibers existed on the boundary surface between the resin region containing [C] and the resin region containing [B] and also the reinforcing fibers were in contact with both the resin region containing [C] and the resin region containing [B], this was considered as the state in which there are "reinforcing fibers in contact with both resin regions across the boundary surface". In the case of the laminate, too, the laminate described in (1) Measurement Method of Tensile Shear Adhesion Strength was used; then, the image was taken using an optical microscope with the magnification of 1000 times in the observing cross section obtained by cutting perpendicularly to the plane direction; the rest of the measurement was performed in the same manner as the case of the prepreg described above.

<Preparation Method of Laminates in Examples 1 to 14 and Comparative Examples 1 and 2>

In Examples 1 to 14 and Comparative Examples 1 and 2, laminates and integrated products were prepared by the method described in (1) Measurement Method of Tensile Shear Adhesion Strength.

<Preparation Method of Laminates in Example 15 and Comparative Examples 3 to 5>

In Comparative Example 3, a polyamide 6 film ("Amilan" (registered trademark) CM1007 (manufactured by Toray Industries, Inc.)) with the basis weight of 50 g/m$^2$ was attached to both surfaces of the reinforcing fiber sheet arranged in plane in one direction; then, this was pressurized with heating at 250°C to obtain the prepreg of carbon fibers having the basis weight of 193 g/m$^2$. The obtained prepreg was cut to a predetermined size; then, for evaluations of the bonding strength and of the compression strength, 8 sheets thereof were stacked to $[0°/90°]_{2s}$ or in the same direction. Then, this was subjected to the pressure of 3 MPa by means of a press machine with heating at 250°C for 10 minutes to obtain each laminate. From the obtained laminate, the tensile shear adhesion strength was measured by the method as described in Examples.

In Example 15, the prepreg [I] was cut to a predetermined size, and a total of 20 sheets thereof were stacked in such a way as to be in the same direction as the reinforcing fiber direction; and a release film for pre-crack introduction was inserted at the position between the 10th and 11th sheets in the middle to obtain a preform.

In Comparative Example 4, the prepreg [II] (not containing the composition element [C]) was cut to a predetermined size, laminated in the same manner as in Example 15, and then, a release film was inserted between the prepregs.

In Comparative Example 5, polyamide particles (SP-500, manufactured by Toray Industries, Inc.) were evenly spread on one surface of the prepreg [II] (not containing composition element [C]) having been cut to a predetermined size such that the amount of the particles per unit area of prepreg might become 7 g/m$^2$. Then, after lamination, in the same way as Example 15, a release film was inserted to obtain a preform.

In all of Example 15 and Comparative Examples 4 and 5, the obtained preform was pressurized by a press machine with a pressure of 0.6 MPa with heating at 180°C for 120 minutes to obtain the laminate; then, with the method described in Examples, the interlaminar fracture toughness value ($G_{IIC}$) thereof was evaluated.

Table 1

| | | | B-1 | B-2 | B-3 | B-4 | B-5 | B-6 | B-7 |
|---|---|---|---|---|---|---|---|---|---|
| [B] Thermosetting resin | Epoxy resin | Tetraglycidyl diaminodiphenylmethane ("Araldite (registered trademark)" MY721) | 40 | 40 | 40 | 40 | 40 | 40 | 40 |
| | | Bisphenol F epoxy ("Epc (registered trademark)" 830) | 60 | 60 | 60 | 60 | 60 | 60 | 60 |
| | Curing agent | 4,4'-Diaminodiphenyl sulfone (Seika Cure S) | 44 | 44 | 44 | 44 | 44 | 44 | |
| | | Dicyandiamide (DICY-7) | | | | | | | 8 |
| | | 3-(3,4-dichlorophenyl)-1,1-dimethylurea (DCMU-99) | | | | | | | 3 |
| | Thermoplastic resin having aromatic ring | Polyether sulfone ("SUMIKAEXCEL (registered trademark)" PES5003P | 16 | 22 | | | | 5 | 9 |
| | | Polyether sulfone (Virantage 10700RFP) | | | 22 | 32 | 50 | | |
| | | Blending amount of thermoplastic resin having aromatic ring (% by mass) | 10 | 13 | 13 | 18 | 26 | 3 | 7 |
| Resin properties of composition element [B] | | Storage modulus at 90°C (Pa) | 2.1 | 8.5 | 5.3 | 9.2 | 112.1 | 0.4 | 0.5 |
| | | Temperature to reach minimum viscosity (°C) | 153 | 155 | 155 | 156 | 158 | 150 | 105 |
| | | Minimum viscosity (Pa·s) | 1.0 | 1.7 | 1.3 | 1.7 | 12.5 | 0.4 | 3.5 |
| | | Thickening factor at 90°C (times) (3 hours) | 1.2 | 1.1 | 1.1 | 1.1 | 1.1 | 1.3 | 47 |

EP 4 074 765 A1

Table 2

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Composition element [A] | Reinforcing fiber | CF-1 | CF-1 | CF-1 | CF-1 | CF-1 | CF-1 | CF-1 | CF-1 | CF-1 | CF-1 |
| Composition element [B] | Thermosetting resin composition | B-1 | B-2 | B-2 | B-2 | B-3 | B-4 | B-5 | B-3 | B-3 | B-3 |
| Composition element [C] | Thermoplastic resin | PA6 | PA6 | PPS-1 | PPS-2 | PPS-2 | PPS-2 | PPS-2 | PEKK1 | PEKK2 | PEEK |
| Composition component including composition element [B] | Blending amount of thermoplastic resin having aromatic ring (% by mass) | 10 | 13 | 13 | 13 | 13 | 18 | 26 | 13 | 13 | 13 |
| Resin properties of composition element [B] | Storage modulus at 90°C (Pa) | 2.1 | 8.5 | 8.5 | 8.5 | 5.3 | 9.2 | 112.1 | 5.3 | 5.3 | 5.3 |
| | Temperature to reach minimum viscosity (°C) | 153 | 155 | 155 | 155 | 155 | 156 | 158 | 155 | 155 | 155 |
| | Minimum viscosity (Pa·s) | 1.0 | 1.7 | 1.7 | 1.7 | 1.3 | 12.5 | 12.5 | 1.3 | 1.3 | 1.3 |
| | Thickening factor at 90°C (times) (3 hours) | 1.2 | 1.1 | 1.1 | 1.1 | 1.1 | 1.1 | 1.1 | 1.1 | 1.1 | 1.1 |
| Resin properties of composition element [C] | Viscosity at temperature higher than melting point or glass transition temperature by 40°C (Pa·s) | 102 | 102 | 870 | 1120 | 1120 | 1120 | 1120 | 389 | 1251 | 1523 |

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Passing properties at prepreg manufacturing process | Resin taking-off of thermosetting resin | No | No | No | No | No | No | No | No | No | No |
| | Scratch in resin film of thermosetting resin | No | No | No | No | No | No | No | No | No | No |
| | Unevenness in film basis weight of thermosetting resin (g/m$^2$) | 2 | 3 | 2 | 2 | 1 | 3 | 9 | 2 | 2 | 2 |
| Prepreg | Presence of reinforcing fiber straddling boundary surface with contacting both resin regions | Yes | Yes | Yes | Yes | Yes | Yes | Yes | Yes | Yes | Yes |
| | Roughness average length RSm of boundary surface ($\mu$m) | 43 | 41 | 69 | 66 | 63 | 65 | 70 | 57 | 62 | 60 |
| | Roughness average height Rc of boundary surface ($\mu$m) | 28 | 26 | 19 | 18 | 20 | 19 | 16 | 20 | 19 | 20 |
| Laminate | Presence of reinforcing fiber straddling boundary surface with contacting both resin regions | Yes | Yes | Yes | Yes | Yes | Yes | Yes | Yes | Yes | Yes |
| | Roughness average length RSm of boundary surface ($\mu$m) | 43 | 43 | 67 | 67 | 61 | 66 | 69 | 58 | 60 | 58 |
| | Roughness average height Rc of boundary surface ($\mu$m) | 27 | 27 | 20 | 17 | 22 | 20 | 17 | 21 | 17 | 22 |

EP 4 074 765 A1

18

(continued)

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Mechanical properties of laminate | Tensile shear adhesion strength at 23°C (MPa) | B 26.0 | B 27.5 | C 24.2 | B 25.7 | B 27.0 | A 28.5 | B 25.3 | A 28.1 | A 28.8 | A 28.8 |
| | Variation coefficient of tensile shear adhesion strength at 23°C (%) | 5.4 | 5.1 | 5.1 | 4.5 | 4.1 | 3.8 | 10.6 | 4.3 | 4.4 | 4.2 |
| | Tensile shear adhesion strength at 80°C (MPa) | B 14.3 | B 15.4 | A 18.3 | A 19.4 | A 20.1 | A 21.1 | A 17.8 | A 20.9 | A 21.4 | A 21.4 |
| | Variation coefficient of tensile shear adhesion strength at 80°C (%) | 5.5 | 5.1 | 4.9 | 4.7 | 4.3 | 3.8 | 10.5 | 4.5 | 4.3 | 4.1 |

Table 3

| | | Example 11 | Example 12 | Example 13 | Example 14 | Example 15 | Comparative Example 1 | Comparative Example 2 | Comparative Example 3 | Comparative Example 4 | Comparative Example 5 |
|---|---|---|---|---|---|---|---|---|---|---|---|
| Composition element [A] | Reinforcing fiber | CF-1 | CF-1 | CF-2 | CF-3 | CF-1 | CF-1 | CF-1 | CF-1 | CF-1 | CF-1 |
| Composition element [B] | Thermosetting resin composition | B-3 | B-3 | B-3 | B-3 | B-3 | B-6 | B-7 | - | B-2 - | B-2 |
| Composition element [C] | Thermoplastic resin | Semi-aromatic PA | PEI | PPS-2 | PPS-2 | PA6 | PA6 | PA6 | PA6 | - | PA6 particle |
| Composition component including composition element [B] | Blending amount of thermoplastic resin having aromatic ring (% by mass) | 13 | 13 | 13 | 13 | 13 | 3 | 7 | - | 13 | 13 |
| Resin properties of composition element [B] | Storage modulus at 90°C (Pa) | 5.3 | 5.3 | 5.3 | 5.3 | 5.3 | 0.4 | 0.5 | - | 8.5 | 8.5 |
| | Temperature to reach minimum viscosity (°C) | 155 | 155 | 155 | 155 | 155 | 150 | 105 | - | 155 | 155 |
| | Minimum viscosity (Pa·s) | | 1.3 | 1.3 | | 1.3 | | 3.5 | - | 1.7 | 1.7 |
| | Thickening factor at 90°C (times)(3 hours) | 1.1 | 1.1 | 1.1 | 1.1 | 1.1 | 1.3 | 47 47 | - | 1.1 | 1.1 |
| Resin properties of composition element [C] | Viscosity at temperature higher than melting point or glass transition temperature by 40°C (Pa·s) | 1315 | 8748 | 1120 | 1120 | 102 | 102 | 102 | 102 | - | - |

EP 4 074 765 A1

| | | Example 11 | Example 12 | Example 13 | Example 14 | Example 15 | Comparative Example 1 | Comparative Example 2 | Comparative Example 3 | Comparative Example 4 | Comparative Example 5 |
|---|---|---|---|---|---|---|---|---|---|---|---|
| Passing properties at prepreg manufacturing process | Resin taking-off of thermosetting resin | No | No | No | No | No | Yes | Yes | - | No | No |
| | Scratch in resin film of thermosetting resin | No | No | No | No | No | No | No | - | No | No |
| | Unevenness in film basis weight of thermosetting resin (g/m$^2$) | 2 | 2 | 2 | 2 | 2 | 18 | 14 | - | 2 | 2 |
| Prepreg | Presence of reinforcing fiber straddling boundary surface with contacting both resin regions | Yes | Yes | Yes | Yes | Yes | Yes | Yes | No | No | No |
| | Roughness average length RSm of boundary surface ($\mu$m) | 59 | 65 | 62 | 63 | 46 | 53 | 54 | - | - | - |
| | Roughness average height Rc of boundary surface ($\mu$m) | 21 | 18 | 20 | 21 | 18 | 20 | 24 | - | - | - |

(continued)

| | | Example 11 | Example 12 | Example 13 | Example 14 | Example 15 | Comparative Example 1 | Comparative Example 2 | Comparative Example 3 | Comparative Example 4 | Comparative Example 5 |
|---|---|---|---|---|---|---|---|---|---|---|---|
| Laminate | Presence of reinforcing fiber straddling boundary surface with contacting both resin regions | Yes | Yes | Yes | Yes | Yes | Yes | Yes | No | No | No |
| | Roughness average length RSm of boundary surface (μm) | 61 | 67 | 63 | 62 | 45 | 51 | 53 | - | - | - |
| | Roughness average height Rs of boundary surface (μm) | 19 | 19 | 22 | 19 | 17 | 20 | 26 | - | - | - |

(continued)

| | | Example 11 | Example 12 | Example 13 | Example 14 | Example 15 | Comparative Example 1 | Comparative Example 2 | Comparative Example 3 | Comparative Example 4 | Comparative Example 5 |
|---|---|---|---|---|---|---|---|---|---|---|---|
| Mechanical properties of laminate | Tensile shear adhesion strength at 23°C (MPa) | A 28.2 | A 28.6 | C 23.5 | A 28.2 | | C 22.1 | C 23.1 | C 24.9 | | |
| | Variation coefficient of tensile shear adhesion strength at 23°C (%) | 4.6 | 4.6 | 9.4 | 4.5 | | 16.2 | 15.3 | 6.5 | | |
| | Tensile shear adhesion strength at 80°C (MPa) | A 19.8 | A 21.3 | A 17.5 | A 20.9 | | C 10.5 | C 11.2 | D 9.8 | | |
| | Variation coefficient of tensile shear adhesion strength at 80°C (%) | 4.4 | 4.6 | 9.2 | 4.3 | | 15.3 | 14.1 | 6.2 | | |
| | $G_{IIC}$ (kJ/m$^2$) | - | - | - | - | 3.9 | - | - | - | 0.9 | 2.6 |

Reference Signs List

1 Prepreg or laminate
2 Composition element [A]
3 Composition element [C], and composition element [B] or composition element [D]
4 Axial direction of any fiber bundle
5 Observing cross section
6 Composition element [A]
7 Resin region containing composition element [C]
8 Resin region containing composition element [B] or composition element [D]
9 Observation image
10 Boundary surface
11 Baseline
12 Perpendicular baseline
13 Cross section curve

**Claims**

1. A prepreg comprising composition elements [A], [B], and [C] described below, wherein
   [B] contains a thermoplastic resin having an aromatic ring with an amount of 10% or more by mass, a resin region containing [B] is present on one surface of the prepreg, a resin region containing [C] is present on another surface of the prepreg, and [A] that crosses over a boundary surface between the resin region containing [B] and the resin region containing [C] and that is in contact with both resin regions is present:

   [A] a reinforcing fiber,
   [B] a thermosetting resin, and
   [C] a thermoplastic resin.

2. The prepreg according to claim 1, wherein, when a cross section perpendicular to a plane of the prepreg including the [A] from a direction that differs by an angle of 45 degrees, in a plane view of the prepreg, to a fiber direction of any [A] in contact with both the resin regions is obtained, a roughness average length RSm is 100 $\mu$m or less and a roughness average height Rc is 3.5 $\mu$m or more; the length and the height being of a cross section curve formed by the boundary surface of both the resin regions in contact with each other in the cross section and being defined by JIS B0601 (2001).

3. The prepreg according to claim 1 or 2, wherein the resin region containing [B] and the resin region containing [C] are configured to form layers adjacent to each other to form the boundary surface.

4. The prepreg according to any one of claims 1 to 3, wherein in [B], at a temperature raising process of 1.5°C/min using a rheometer, a storage modulus at 90°C is in a range of 1.0 to 100 Pa, a minimum viscosity is 0.5 Pa·s or more, and a temperature at which the minimum viscosity is reached is 120°C or higher.

5. A laminate comprising layers containing composition elements [A], [C], and [D] described below, wherein
   [D] contains 10% or more by mass of a thermoplastic resin having an aromatic ring, and [A] that crosses over a boundary surface between a resin region containing [C] and a resin region containing [D] and that is in contact with both resin regions is present:

   [A] a reinforcing fiber,
   [C] a thermoplastic resin, and
   [D] a thermosetting resin cured product.

6. The laminate according to claim 5, wherein, when a cross section perpendicular to a plane of the laminate including the [A] from a direction that differs by an angle of 45 degrees, in a plane view of the laminate, to a fiber direction of any [A] in contact with both the resin regions is obtained, a roughness average length RSm is 100 $\mu$m or less and a roughness average height Rc is 3.5 $\mu$m or more; the length and the height being of a cross section curve formed by the boundary surface of both the resin regions in contact with each other in the cross section and being defined by JIS B0601 (2001).

7. The laminate according to claim 5 or 6, wherein the resin region containing [C] and the resin region containing [D] are layered adjacent to each other to form the boundary surface.

8. The laminate according to any one of claims 5 to 7, wherein the resin region containing the composition element [C] is present on a surface of the laminate.

9. The laminate according to any one of claims 5 to 8, wherein in an uncured state of [D] before curing, at a temperature raising process of 1.5°C/min using a rheometer, a storage modulus at 90°C is in a range of 1.0 to 100 Pa, a minimum viscosity is 0.5 Pa·s or more, and a temperature at which the viscosity is reached is in a range of 120°C or higher.

10. The prepreg according to any one of claims 1 to 4, or the laminate according to any one of claims 5 to 9, satisfying at least one of the following [1] and [2] :

[1] that the thermoplastic resin having the aromatic ring is a polyether sulfone or a polyether imide, and
[2] that a weight-average molecular weight of the thermoplastic resin having the aromatic ring is in a range of 10,000 to 40,000 g/mol both inclusive.

11. The prepreg according to any one of claims 1 to 4, or the laminate according to any one of claims 5 to 10, wherein a content of the thermoplastic resin having the aromatic ring therein is 13% or more by mass.

12. The prepreg according to any one of claims 1 to 4, or the laminate according to any one of claims 5 to 11, wherein [C] satisfies at least one of the following [3] and [4] :

[3] that [C] is one or two or more selected from a polyamide, a polyarylene ether ketone, a polyphenylene sulfide, a polyether sulfone, or a polyether imide, and
[4] that when [C] is a crystalline thermoplastic resin, a viscosity of [C] at a temperature higher than a melting point of [C] by 40°C is, or when [C] is an amorphous thermoplastic resin, a viscosity of [C] at a temperature higher than a glass transition temperature of [C] by 40°C is in a range of 1,000 to 100,000 Pa·s.

13. The prepreg according to any one of claims 1 to 4, or the laminate according to any one of claims 5 to 12, wherein a reinforcing fiber having, as measured by a Wilhelmy method, a surface free energy in a range of 10 to 50 mJ/m$^2$ is used as [A] .

14. A laminate having a cured product of the prepreg according to any one of claims 1 to 4 that constitutes at least some of layers of the laminate.

15. An integrated product, wherein another member is integrated with the laminate according to claim 8 by bonding to a surface on which [C] is present, the surface being a surface of the laminate.

# FIG.1

# FIG.2

International application No.

PCT/JP2020/043325

## INTERNATIONAL SEARCH REPORT

| A. CLASSIFICATION OF SUBJECT MATTER |
| --- |
| C08J 5/24(2006.01)i; B32B 5/28(2006.01)i<br>FI: C08J5/24 CEZ; B32B5/28 A |
| According to International Patent Classification (IPC) or to both national classification and IPC |

| B. FIELDS SEARCHED |
| --- |
| Minimum documentation searched (classification system followed by classification symbols)<br>C08J5/24; B32B5/28 |
| Documentation searched other than minimum documentation to the extent that such documents are included in the fields searched<br>   Published examined utility model applications of Japan      1922-1996<br>   Published unexamined utility model applications of Japan    1971-2021<br>   Registered utility model specifications of Japan            1996-2021<br>   Published registered utility model applications of Japan    1994-2021 |
| Electronic data base consulted during the international search (name of data base and, where practicable, search terms used) |

| C. DOCUMENTS CONSIDERED TO BE RELEVANT |
| --- |

| Category* | Citation of document, with indication, where appropriate, of the relevant passages | Relevant to claim No. |
| --- | --- | --- |
| Y | JP 2004-269878 A (TORAY INDUSTRIES, INC.) 30 September 2004 (2004-09-30) claims, paragraphs [0019], [0022]-[0026], [0030], [0099]-[0106], fig. 7 | 1-15 |
| Y | WO 2019/098243 A1 (TORAY INDUSTRIES, INC.) 23 May 2019 (2019-05-23) claims, paragraphs [0024]-[0026], [0127] | 1-15 |
| Y | JP 2013-209626 A (SUMITOMO BAKELITE CO., LTD.) 10 October 2013 (2013-10-10) claims, paragraphs [0028]-[0029], [0092]-[0115], fig. 2-4 | 2, 6 |
| A | JP 2016-097676 A (THE BOEING CO.) 30 May 2016 (2016-05-30) entire text, all drawings | 1-15 |

|   | Further documents are listed in the continuation of Box C. | ☒ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>   25 January 2021 (25.01.2021) | Date of mailing of the international search report<br>   09 February 2021 (09.02.2021) |
| --- | --- |
| Name and mailing address of the ISA/<br>   Japan Patent Office<br>   3-4-3, Kasumigaseki, Chiyoda-ku,<br>   Tokyo 100-8915, Japan | Authorized officer<br><br>Telephone No. |

Form PCT/ISA/210 (second sheet) (January 2015)

INTERNATIONAL SEARCH REPORT
Information on patent family members

International application No.

PCT/JP2020/043325

| Patent Documents referred in the Report | Publication Date | Patent Family | Publication Date |
|---|---|---|---|
| JP 2004-269878 A | 30 Sep. 2004 | US 2006/0110599 A1 claims, paragraphs [0015]-[0016], [0116], [0170], examples, fig. 2 WO 2004/060658 A1 EP 1593491 A1 CN 101085865 A KR 10-2010-0018097 A | |
| WO 2019/098243 | 23 May 2019 | (Family: none) | |
| JP 2013-209626 A | 10 Oct. 2013 | WO 2013/128841 A1 TW 201343740 A KR 10-2014-0127803 A | |
| JP 2016-097676 A | 30 May 2016 | US 2016/0144595 A1 entire text, all drawings EP 3025853 A1 CN 105619905 A | |

Form PCT/ISA/210 (patent family annex) (January 2015)

## REFERENCES CITED IN THE DESCRIPTION

**Patent documents cited in the description**

- JP 2018161801 A
- JP H10138354 A
- JP 3906319 B
- JP H08259713 A